# EUROPÄISCHE PATENTANMELDUNG

(11) **EP 4 621 682 A1**
(43) Veröffentlichungstag der Anmeldung: **24.09.2025**
(21) Anmeldenummer: 25159796.9
(22) Anmeldetag: 25.02.2025
(51) Int. Cl.: G06Q 10/20, G06Q 10/06, G05B 19/05, G05B 19/418, G05B 23/02

(54) **MASCHINE UND VERFAHREN ZUR BEDIENERGEFÜHRTEN INBETRIEBNAHME DER MASCHINE**

(30) Priorität: 20.03.2024 DE 102024107937
(71) Anmelder: Krones AG, 93073 Neutraubling (DE)
(72) Erfinder: Schmuck, Jesse, 93073 Neutraubling (DE); Ledderer, Johannes, 93073 Neutraubling (DE)
(74) Vertreter: Grünecker Patent- und Rechtsanwälte PartG mbB

(57) **Zusammenfassung**

Die Erfindung betrifft eine Maschine und Verfahren zur bedienergeführten Inbetriebnahme der Maschine, insbesondere eine Maschine in einer Maschinenlinie zum Abfüllen und Verpacken von Lebensmitteln und/oder Getränken. Durch die Erfindung wird ein Inbetriebnahme-Status für Bausteine in einer Speicherprogrammierbaren Steuerung (SPS) der Maschine ausgelesen. Der Inbetriebnahme-Status eines Bausteins ist in der SPS gespeichert und zeigt an, ob der Baustein bereits in Betrieb genommen wurde oder nicht. Der Inbetriebnahme-Status für den Baustein wird an einen Server übertragen und falls der Inbetriebnahme-Status anzeigt, dass der Baustein bisher nicht in Betrieb genommen wurde, werden eine oder mehrere Handlungsanweisungen von dem Server empfangen. Die empfangenen Handlungsanweisung können an einen Benutzer ausgegeben werden. Der Inbetriebnahme-Status für den Baustein wird in der SPS basierend auf einer Handlung des Benutzers geändert.

## Beschreibung

Die Erfindung betrifft eine Maschine und ein Verfahren zur bedienergeführten Inbetriebnahme der Maschine, insbesondere einer Maschine in einer Maschinenlinie zum Abfüllen und Verpacken von Lebensmitteln und/oder Getränken.

Heutige Abfüll- und Verpackungsanlagen in der Flüssignahrungsmittelindustrie sind hoch optimiert und verarbeiten bis zu 120.000 Einheiten pro Stunde. Eine typische Abfüll- und Verpackungsanlage umfasst typischerweise eine Vielzahl verschiedener Maschinen und Module, die über Transportbänder miteinander verbunden sind.

Diese Maschinen werden für den Versand von einem Hersteller zum Kunden häufig demontiert und verlieren damit den Charakter im Werk getestet zu sein. Große Maschinen oder Maschinenanlagen, wie beispielsweise Tunnelpasteure sind so groß, dass diese im Werk gar nicht erst installiert und getestet werden können. So werden die Maschinen erst beim Kunden mechanisch installiert, dort verkabelt und in Betrieb genommen. In diesem hoch komplexen Prozess können viele Fehler passieren, so dass die Installation und Verkabelung für die Inbetriebnahme aufwendig getestet werden muss.

Dieser I/O-Test muss von einem Inbetriebnehmer sorgfältig durchgeführt werden. Jedoch ist es häufig der Fall, dass diese Tests aufgrund von Zeitdruck und anderen Problemen nur mäßig durchgeführt werden.

Beispielsweise wurde die Inbetriebnahme komplexer Maschinen häufig bisher auf Grundlage der Erfahrung des Bedieners durchgeführt. Das bedeutet, dass der Bediener, basierend auf seiner vorherigen Erfahrung mit ähnlichen Maschinen, entschied, welche Schritte und Überprüfungen notwendig waren. Hierbei besteht das Risiko von Abweichungen von den spezifischen Herstellerempfehlungen. Solche Abweichungen können dazu führen, dass bestimmte sicherheitsrelevante oder leistungsoptimierende Schritte übersehen werden, was potenziell die Leistung der Maschine beeinträchtigt oder sogar zu Schäden oder Unfällen führen kann.

Ein weiterer Nachteil des bisherigen Vorgehens ist das Fehlen einer systematischen Protokollierung des Inbetriebnahmeprozesses. Die Protokollierung ist nicht nur aus Gründen der Qualitätssicherung und Rückverfolgbarkeit wichtig, sondern kann auch bei der Fehlerdiagnose eine entscheidende Rolle spielen. Ohne eine detaillierte Aufzeichnung dessen, was während der Inbetriebnahme getan wurde, können Probleme, die später auftreten, nur schwer zugeordnet oder gelöst werden. Die Dokumentation bleibt bei bisheriger Inbetriebnahme oftmals auf der Strecke und es ist am Ende unklar welche Arbeiten und Korrekturen durchgeführt wurden. Bei dem Wechsel von Personal auf den Baustellen entsteht eine Informationslücke, die meist nicht geschlossen werden kann.

Somit hat der Stand der Technik in Bezug auf die Inbetriebnahme komplexer Maschinen wenigstens zwei wesentliche Nachteile: Das Risiko von Abweichungen von den Herstellerempfehlungen aufgrund der starken Abhängigkeit von der individuellen Erfahrung des Bedieners und das Fehlen einer systematischen und automatisierten Protokollierung des Inbetriebnahmeprozesses. Es besteht daher ein Bedarf an einer Lösung, die diese Lücken schließt und somit die Sicherheit und Effizienz bei der Inbetriebnahme komplexer Maschinen erhöht.

Die Aufgabe wird erfindungsgemäß durch ein Verfahren gemäß Anspruch 1 und eine Maschine gemäß Anspruch 7 gelöst. Ausführungsformen und Weiterbildungen sind in den Unteransprüchen erfasst.

Eine Ausführungsform der Erfindung betrifft Verfahren zur bedienergeführten Inbetriebnahme einer Maschine, insbesondere einer Maschine in einer Maschinenlinie zum Abfüllen und Verpacken von Lebensmitteln und/oder Getränken. Durch die Ausführungsform wird ein Inbetriebnahme-Status für Bausteine in einer Speicherprogrammierbaren Steuerung (SPS) der Maschine ausgelesen. Der Inbetriebnahme-Status eines Bausteins ist in der SPS gespeichert und zeigt an, ob der Baustein bereits in Betrieb genommen wurde oder nicht. Der Inbetriebnahme-Status für den Baustein wird an einen Server übertragen und falls der Inbetriebnahme-Status anzeigt, dass der Baustein bisher nicht in Betrieb genommen wurde, werden eine oder mehrere Handlungsanweisungen von dem Server empfangen. Die empfangenen Handlungsanweisung können an einen Benutzer ausgegeben werden. Der Inbetriebnahme-Status für den Baustein wird in der SPS basierend auf einer Handlung des Benutzers geändert.

Eine weitere Ausführungsform der Erfindung betrifft eine entsprechende Maschine mit bedienergeführter Inbetriebnahme. Die Maschine umfasst wenigstens eine Speicherprogrammierbare Steuerung (SPS), eine Edge-Vorrichtung und eine Eingabe-Ausgabeeinheit. Die SPS speichert einen Inbetriebnahme-Status für wenigstens einen Baustein der Maschine, der anzeigt, ob der Baustein bereits in Betrieb genommen wurde oder nicht. Die Edge-Vorrichtung sendet den Inbetriebnahme-Status an einen Server und empfängt Handlungsanweisungen von dem Server. Die Eingabe-Ausgabeeinheit gibt Handlungsanweisungen an einen Benutzer aus und zum empfängt Benutzereingaben und ein Handlungsanweisungen von dem Server.

Beispielhafte Aspekte der Erfindung sind in den Zeichnungen dargestellt. Es zeigen:
**Figur 1****:** ein Diagramm, das eine Übersicht über die wesentlichen Elemente und die Grundstruktur der Erfindung zeigt;
**Figur 2****:** ein Diagramm, das eine beispielhafte Implementierung des Inbetriebnahme-Status in einer Speicherprogrammierbaren Steuerung (SPS) zeigt;
**Figur 3****:** ein beispielhaftes Ablaufdiagramm für ein Verfahren zur bedienergeführten Inbetriebnahme der Maschine;
**Figur 4****:** eine beispielhafte Anlagenkonfiguration für PET-Behälter und Klebegebinde;
**Figur 5****:** eine beispielhafte Anlagenkonfiguration für PET-Behälter und Schrumpfpacker;
**Figur 6****:** eine beispielhafte Anlagenkonfiguration für Dosen oder Glasflaschen; und
**Figur 7****:** eine beispielhafte Anlagenkonfiguration für Dosen.

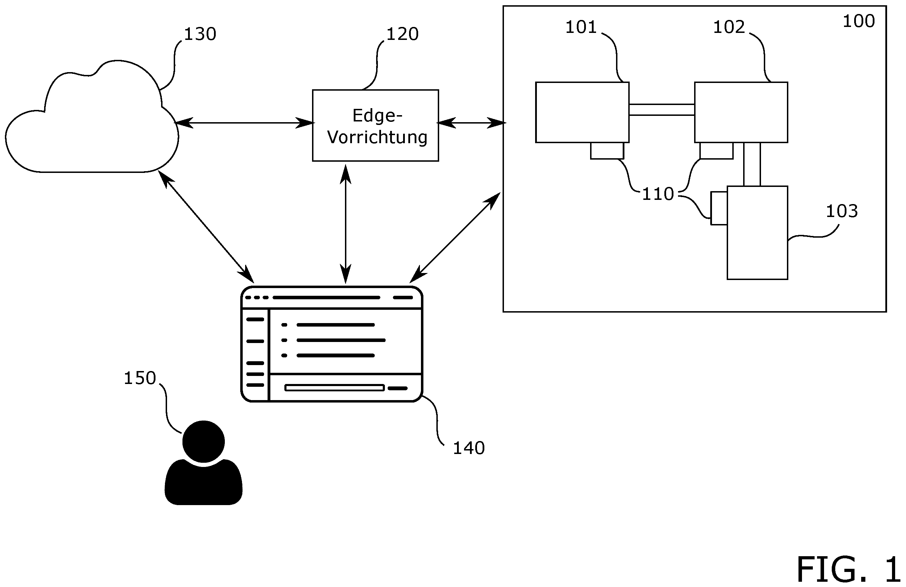

Figur 1 zeigt ein Diagramm, das eine Übersicht über die wesentlichen Elemente und die Grundstruktur der Erfindung zeigt. Eine Maschinenlinie 100, beispielsweise zum Abfüllen von Getränken, umfasst eine oder mehrere Maschinen 101, 102 und 103. Die Maschinen 101-103 können funktionell miteinander verbunden sein, wie beispielsweise über Transportbänder, die einen Transportfluss von Materialien sicherstellen. Die vorliegende Erfindung ist jedoch nicht auf eine Maschinenlinie 100 bzw. auf eine Vielzahl von miteinander verbundenen Maschinen 101-103 beschränkt. Konzepte der Erfindung können auch für eine einzelne Maschine Anwendung finden.

Eine Maschine 101-103 kann mithilfe einer Speicherprogrammierbaren Steuerung (SPS) gesteuert werden. Eine SPS ist eine elektronische Vorrichtung, die speziell entwickelt wurde, um Maschinen, Module und Anlagen in industriellen Anwendungen zu steuern. Sie kann als Schnittstelle zwischen Sensoren Aktuatoren einer Maschine oder Anlage und dem eigentlichen Steuerungsprogramm dienen, das die Abläufe und Funktionen definiert. SPS sind im allgemeinen bekannt. Im Folgenden soll auf die Grundfunktionen von SPS eingegangen werden. Im Wesentlichen funktioniert eine SPS, indem sie Eingangssignale von verschiedenen Sensoren (wie beispielsweise Temperatursensoren, Näherungssensoren, Lichtschranken, etc.) erfasst, diese Informationen gemäß einem vorprogrammierten Algorithmus oder einer Steuerungslogik verarbeitet und anschließend entsprechende Ausgangssignale an Aktuatoren (wie beispielsweise Motoren, Ventile oder Relais) sendet, um bestimmte Aktionen auszuführen.

Die Programmierung einer SPS erfolgt typischerweise über spezielle Softwaretools und eine spezifizierte Programmiersprache, die oft auf dem IEC 61131-3 Standard basiert. Dieser Standard definiert mehrere Programmiersprachen für SPS, wie Funktionsbaustein-Diagramme. Die Erfindung ist jedoch nicht auf diesen Standard beschränkt, sondern kann auch mit anderen SPS-Programmier-Standards implementiert werden.

Eine SPS gemäß beispielhafter Aspekte der Erfindung kann "Eingänge", "Ausgänge" und "Bausteine" definieren. Beispiele für Eingänge könne insbesondere Einfänge für Sensoren, Schalter und/oder Taster sein. Diese können physische Größen wie Temperatur, Druck, Position oder Lichtintensität messen. Schalter und Taster können manuell betätigt werden, um einen bestimmten Zustand oder eine Aktion in der SPS auszulösen, wie beispielsweise ein Start-Stopp-Schalter für eine Maschine.

Beispiele für Ausgänge können Aktuatoren, Alarmsysteme, oder Kommunikationssignale sein. Dazu gehören Motoren, Ventile, Heizelemente oder Lichter. Ein Ausgang der SPS kann beispielsweise ein Ventil in einer Pipeline öffnen oder schließen, eine Warnlampe oder einen Summer aktivieren, wenn ein bestimmter Zustand erreicht ist, oder Signale an andere Systeme oder Computer senden, um Informationen zu übermitteln oder Aktionen in anderen Teilen eines vernetzten Systems auszulösen.

Des Weiteren können die Bausteine einer SPS auch komplexere Funktionsblöcke umfasst, wie beispielsweise Logikbausteine für PID-Regler, ein Funktionsblock, der in vielen industriellen Anwendungen verwendet wird, um Prozesse durch proportionale, integrierende und differenzierende Steuerung zu regeln. Diese Beispiele geben einen Überblick über die verschiedenen Arten von Bausteinen, wie Eingängen, Ausgängen und anderen Funktionsblöcken, die in einer SPS-Steuerung verwendet werden können.

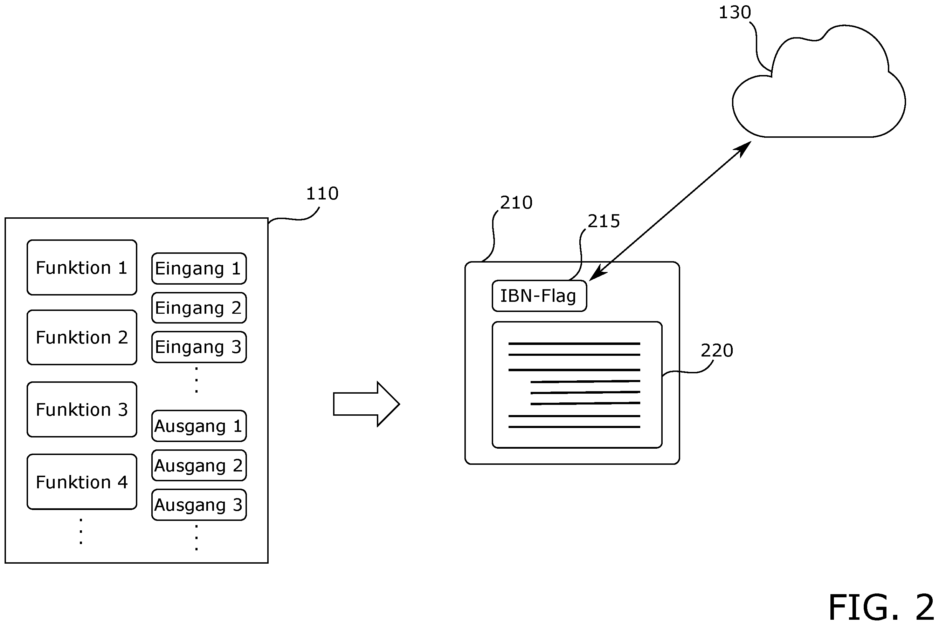

Wie des Weiteren in Figur 1 zu sehen ist, kann eine Edge-Vorrichtung 120 als Bestandteil der Maschine 101-103, oder der Maschinenlinie 100 implementiert werden. Die Edge-Vorrichtung 120 kann auch als eigenständige Vorrichtung an die Maschinen 101-103 gekoppelt werden, oder kann Bestandteil der Maschine(n) 101-103 sein. Über die Edge-Vorrichtung 120 können Daten zwischen der Maschinenlinie 100 und einem Server 130 ausgetauscht werden, wie insbesondere im Zusammenhang mit Figur 2 noch ausführlicher diskutiert.

Zusätzlich kann gemäß einigen Ausführungsformen noch eine Eingabe-Ausgabeeinheit 140 zur (beispielsweise visuellen) Ausgabe von Maschinendaten, Informationen oder Handlungsanweisungen an einen Benutzer 140, bzw. zur Eingabe von Steuerbefehlen des Benutzers 150 vorgesehen sein. Die Eingabe-Ausgabeeinheit 140 kann sowohl mit der Maschinenlinie 100, mit einzelnen Maschinen 101-103, mit der Edge-Vorrichtung 120 und/oder mit dem Server verbunden sein. Die Verbindungen können direkte drahtgebundene oder drahtlose Verbindungen sein, oder können indirekte Verbindungen über ein Netzwerk, wie beispielsweise das Internet oder ein Intranet, sein.

Die Eingabe-Ausgabeeinheit 140 kann ein klassisches HMI (Human-Machine-Interface) sein, aber kann auch ein Mobilgerät, wie beispielsweise ein Smartphone, Tablet, Computer sein.

Bezugnehmend auf Figur 2, werden weitere Details der SPS 110 gemäß Ausführungsformen der Erfindung erläutert werden. Gemäß einigen Ausführungsformen der Erfindung kann in der SPS 110 ein zusätzlicher Baustein 215 oder eine zusätzliche Information in jeden Baustein der SPS implementiert werden. Diese zusätzliche Information wird im Folgenden als "Inbetriebnahme-Status" oder IBN-Flag 215 bezeichnet und zeigt an, ob der jeweilige Baustein der SPS bereits in Betrieb genommen wurde oder nicht. Das IBN-Flag 215 kann beispielsweise ein definiertes Bit sein, dessen Zustand entweder "0" oder "1" ist, wobei beispielsweise "0" bedeutet, dass der Baustein bisher noch nicht in Betrieb genommen wurde und "1" bedeutet, dass der Baustein bereits schon einmal in Betrieb genommen wurde. Die genaue Festlegung und Implementierung eines Wertes der IBN-Flag 215 ist nicht auf dieses Beispiel beschränkt.

Gemäß Ausführungsformen der Erfindung wird beim Hochfahren bzw. Starten einer Maschine jeder Baustein (Funktionen, Eingänge, Ausgänge) der in der SPS 110 implementiert ist, einmal "gecheckt", um sicherzustellen, dass der jeweilige Baustein auch ordnungsgemäß funktioniert. Wenn das vor der ersten Inbetriebnahme der Maschine(n) 101-103 nicht geschieht, kann nicht sichergestellt werden, dass die Maschinen 101-103 ordnungsgemäß funktionieren.

Standardmäßig wird gemäß Ausführungsformen der Erfindung das IBN-Flag 215 für jeden Baustein in jeder SPS 110 vom Hersteller der Maschine 101-103 auf "0", d.h. auf "noch nicht in Betrieb genommen" gesetzt, bevor die Maschine 101-103 ausgeliefert wird.

Ein Inbetriebnahme-Prozess kann gestartet werden, wenn der Eingang/Ausgang/Funktionsblock in einer SPS 110 das erste Mal in Betrieb genommen wird. Dann kann eine spezifische Routine oder Funktion innerhalb des SPS-Programms ausgeführt werden, die den Zustand der IBN-Flag 215 überprüft oder ausliest. Wenn die Maschine 101-103 eingeschaltet wird, kann sich die Edge-Vorrichtung mit dem Server 130 verbinden und diese IBN-Flag 215 -Informationen der SPS-Bausteine an den Server 130 übermitteln.

Der Server kann mittels der IBN-Flag 215 erkennen, dass die Bausteine noch nicht in Betrieb genommen sind und kann dann entsprechende Tasks (d.h. Handlungs- oder Arbeitsanweisung) für die einzelnen IBN-Flags 215 in den unterschiedlichen Bausteinen erstellen. Alternativ kann die Edge-Vorrichtung auch nur solche IBN-Flags 215, bzw. die darin enthaltene Information an den Server 130 schicken, die anzeigen, dass der SPS-Baustein noch nicht in Betrieb genommen wurde.

Die vom Server 130 empfangenen Handlungsanweisungen können beispielsweise über die Edge-Vorrichtung 120 empfangen werden und dem Benutzer über die Eingabe-Ausgabeeinheit 140 angezeigt werden.

Ein Beispiel für eine Handlungsanweisung könnte beispielsweise sein, dass der Benutzer 150 aufgefordert wird, zu einem bestimmten Schmutzfänger zu gehen und ihn zu reinigen, oder zu einem definierten Temperatursensor zu gehen, ihn heraus zu nehmen und ihn in der Hand zu halten, um eine Temperaturänderung in der SPS 110 erfolgreich festzustellen.

Gemäß einigen Ausführungsformen können Funktionen der Maschine auch mit Hilfe von digitalen Zwillingen (auf der Maschine 101-103 oder dem Server 130) verifiziert werden.

So kann jeder Eingang, Ausgang, d.h. jeder Baustein der SPS 110 hintereinander weg in Betrieb genommen werden. Der Benutzer 150 kann diese Inbetriebnahme über die Eingabe-Ausgabeeinheit 140 auch dem System rückmelden. Der Benutzer 150 kann die Handlungsanweisung somit abmelden, beispielsweise durch eine Eingabe, die das IBN-Flag 215 auf "1", d.h. auf "in Betrieb genommen" setzt. Der Server 130 kann die Inbetriebnahme registrieren, da die IBN-Flag 215 nun nicht mehr "0" sondern "1" ist.

Optional kann der Server 130 des Weiteren entsprechenden Parameterwerte abspeichern, die durch die Benutzeraktion festgestellt werden können, wenn etwas zu parametrisieren ist. Dadurch kann gleichzeitig noch eine Dokumentation über die Inbetriebnahme und den festgestellten Werten erfolgen.

Somit ermöglicht die Erfindung eine erhöhte Qualitätsabsicherung und Dokumentation, da die Informationen über die Inbetriebnahme an den Server 130 übertragen werden können. Beispielsweise können Daten über die Durchführung, den Zeitpunkt der Durchführung und Angaben über den durchführenden Benutzer 150 an den Server 130 bei der Inbetriebnahme der einzelnen SPS 110 übertragen werden.

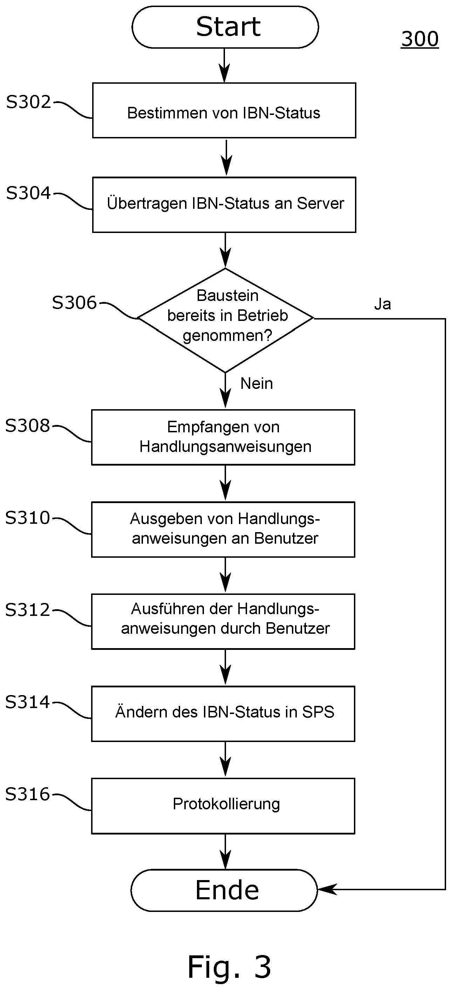

Figur 3 zeigt ein beispielhaftes Ablaufdiagramm für ein Verfahren zur bedienergeführten Inbetriebnahme der Maschine 101-103. Das Verfahren startet bei Schritt S302, wenn ein Inbetriebnahme-Status (IBN-Status) bestimmt wird. Der Schritt kann umfassen, dass eine Inbetriebnahme-Prozedur startet, sobald die Maschine eingeschaltet wird. Durch die Inbetriebnahme-Prozedur kann die IBN-Flag 215 für einen SPS-Baustein abgerufen werden. Beispielsweise kann die SPS 110 bei Initialisierung die IBN-Flag 215 für jeden Baustein der SPS automatisch an die Edge-Vorrichtung 120 übertragen, oder die Edge-Vorrichtung 120 kann die IBN-Flags automatisch von den entsprechenden SPS anfordern oder auslesen, wenn die Maschine gestartet wird.

In Schritt S304 wird der Wert der IBN-Flag 215 an den Server 130 übertragen. Beispielsweise kann der Wert der IBN-Flag 215 bzw. der Inbetriebnahme-Status von der Edge-Vorrichtung 120 an den Server übertragen werden. In Schritt S306 wird dann mittels der IBN-Flag 215 bestimmt, ob der Baustein der SPS bereits in Betrieb genommen wurde oder nicht.

Es ist zu beachten, dass die Schritte S304 und S306 auch zusammengefasst werden können und die SPS 110 mittels der ausgelesenen IBN-Flag 215 selbst bestimmen kann, ob der Baustein bereits in Betrieb genommen wurde. Gemäß manchen Ausführungsformen könnte die Edge-Vorrichtung 120 auch nur solche IBN-Flags 215 für solche SPS-Bausteine an den Server 130 senden, die anzeigen, dass der Baustein noch nicht in Betrieb genommen wurde.

Wenn die Baustein-Prüfung in S304 ergibt, dass der Baustein noch nicht in Betrieb genommen wurde, kann in Schritt S308 eine oder mehrere Handlungsanweisungen empfangen werden. Beispielsweise werden die Handlungsanweisungen vom Server 130 über die Edge-Vorrichtung 120 empfangen. Die Handlungsanweisungen können in Schritt S310 an den Benutzer oder Inbetriebnehmer ausgegeben werden. Beispielsweise kann die Handlungsanweisung über die Eingabe-Ausgabeeinheit 140 an den Benutzer 150 ausgegeben werden.

Der Benutzer oder Inbetriebnehmer kann die entsprechenden Anweisungen in Schritt S312 dann ausführen oder umsetzen. Die Durchführung der Handlungsanweisungen kann an der SPS automatisch erkannt werden, beispielsweise durch Sensoren, die bei ordnungsgemäßer Durchführung der entsprechenden Handlungsanweisung ein entsprechendes Sensor-Event messen. In einigen Ausführungsformen kann der Benutzer auch durch die Handlungsanweisungen aufgefordert werden, entsprechende Parameter einzugeben, die sich aus dem Kontext ergeben. Diese Parameter können von der SPS 110 und/oder von der Edge-Vorrichtung 120 gespeichert werden und optional auch an den Server 130 übermittelt werden.

Durch die Ausführung der Handlungsanweisungen durch den Benutzer wird der Inbetriebnahme-Status, bzw. die IBN-Flag 215 des entsprechenden SPS-Bausteins in der SPS 110 von "0" auf "1"gesetzt und der Task, d.h. die Handlugnsanweisung auf dem Server 130 als "durchgeführt" markiert und/oder abgemeldet. Die Änderung der IBN-Flag 215 in Schritt S314 kann automatisch geschehen, indem die SPS 110 die Handlung des benutzers registriert (beispielsweise über Sensor-Events), oder kann vom Benutzer 150 manuell mittels der Eingabe-Ausgabeeinheit 140 in die SPS übertragen werden.

In einem optionalen Schritt S316 kann die Ausführung der Handlungsanweisungen durch den Benutzer 150 protokolliert werden und an den Server 130 übertragen werden, wie oben beschrieben. wonach das das Verfahren endet.

Mit der Durchführung der Inbetriebnahme gemäß der hierin beschrieben Erfindung, können weitreichende Vorteile generiert werden. Die Inbetriebnahme der Maschinen 101-103 kann vollständig durchgeführt werden, auch wenn Funktionen oder Eingänge/Ausgänge der SPS dem Inbetriebnehmer unbekannt sind. Die Inbetriebnahme kann automatische dokumentiert werden und der Zustand der Maschine damit für alle nachfolgenden Prozesse transparent dokumentiert werden.

Des Weiteren kann dank der Erfindung auch parallel von mehreren Inbetriebnehmern an einer Maschine 101-103 gearbeitet werden, ohne dass Arbeiten doppelt ausgeführt oder vergessen werden. Bei einem Wechsel des Baustellenpersonals kann mittels der Erfindung der Arbeitsstand klar und sicher dokumentiert sein und es gehen keine Informationen verloren. Der Status der Inbetriebnahme ist für alle (auf der Baustelle und im Werk) transparent, so dass effizienter geplant werden kann, während gleichzeitig die Häufigkeit von Fehlern reduziert werden kann.

Die Inbetriebnehmer müssen nicht alle technischen Details der Maschinen 101-103 kennen um die Anlage in Betrieb nehmen zu können. Die Handlungsanweisungen können die Inbetriebnehmer sicher durch die Tätigkeiten leiten. Die Beschreibungen der Handlungsanweisungen können in weitere Sprachen übersetzt werden um weitere Internationalisierung zu ermöglichen.

Ein weiterer Vorteil der Erfindung ist, dass man später (im Lebenszyklus der Maschine 101-103) eine erneute Inbetriebnahme durchführen kann, um Veränderungen fest zu stellen. ("Lifecycle Service" (LCS-) Maschinenoptimierungen).

Durch die Erfindung lässt sich ein klarer dokumentierter Zustand der Inbetriebnahme und deren Ergebnisse (für spätere Fehlersuche bei Reklamationen) erreichen. Das Qualifikationslevel kann für einige Schritte der Inbetriebnahme abgesenkt werden und Support vom Hersteller ist effizienter möglich, da dort die Zustandsdaten und bereits abgemeldeter und offener Tasks in dem Server 130 bekannt sind. Gleichzeitig werden auch die Möglichkeiten für Remote-Inbetriebnahmen deutlich verbessert.

Insgesamt kann mittels der Erfindung die Inbetriebnahme gesteuert werden, die Qualität gesichert werden und Dokumentation erstellt werden.

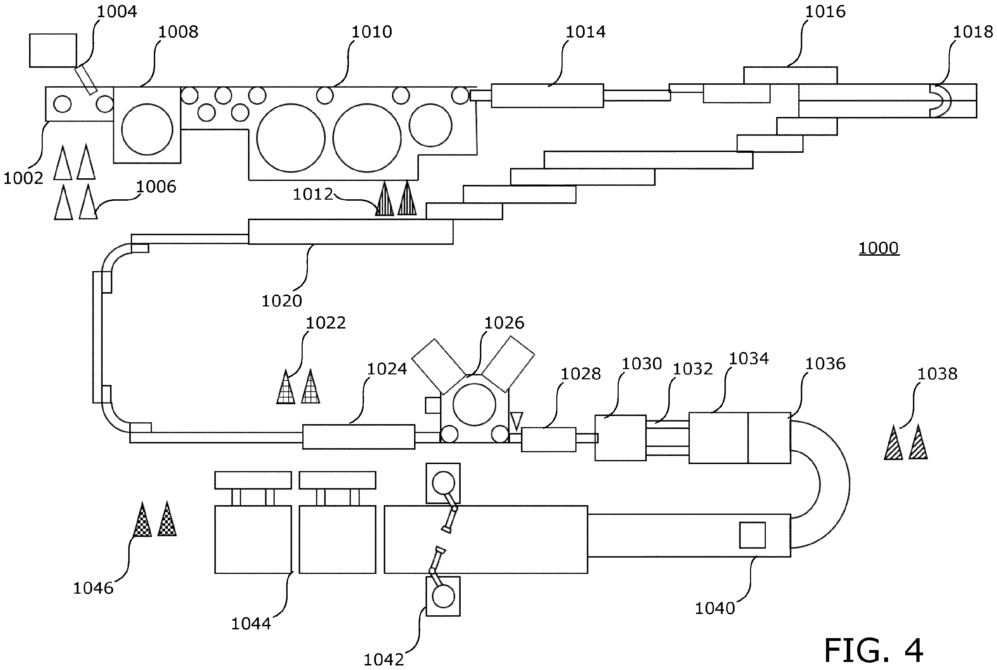

In den folgenden Figuren 4 bis 7 werden verschiedene beispielhafte Anlagenkonfigurationen für verschiedene Flaschenabfüllanlagen beschrieben, in denen die Erfindung oder wenigstens Teile und Aspekte der Erfindung implementiert werden können. Die Beschreibung der Figuren 4 bis 7 soll nur eine allgemeine Übersicht über Maschinen geben, für welche Zustandsdaten gesammelt werden können, auf deren Grundlage das LLM Benutzeranfragen verarbeiten kann.

Figur 4 zeigt eine beispielhafte Anlagenkonfiguration 1000 für PET-Flaschen oder PET-Behälter und Klebegebinde. Wie in Figur 4 zu sehen, umfasst die Anlagenkonfiguration 1000 verschiedenste Module, die eine Linie bilden, an deren Ende fertig abgefüllte PET-Behälter in Form eines Gebindes auf Paletten ausgegeben werden. Einige der Module und Maschinen können dabei optional sein und die Erfindung ist nicht auf die genaue Form und Anordnung der Anlagenkonfigurationen beschränkt.

Die Anlagenkonfiguration 1000 umfasst einen Ofen 1002 für Preforms, eine Preform-Sortierung mit Zuführmaschine 1004 und eine Blasmaschine 1008. Die Module 1002, 1004 und 1008 bilden im Allgemeinen eine Streckblasmaschine, in welcher PET-Behälter aus einem Ausgangsmaterial hergestellt und geformt werden. Die hergestellten PET-Behälter werden weitergeleitet in einen Füller 1010, in dem die Flaschen befüllt werden. Der Füller kann optional einen Rinser umfassen. In den Preforms können sich während der Lagerung oder des Transports verschiedene Partikel wie Staub, Pappe oder Reste von Holzpaletten ablagern. Mit dem Rinser lassen sich diese entfemen. Am Ende des Füllers kann ein Verschließer angeordnet sein, mittels welchem die PET-Behälter nach der Befüllung verschlossen werden.

Optional kann die Anlagenkonfiguration 1000 nach dem Füller 1010 eine Drehvorrichtung umfassen, die bei Heißabfüllung der PET-Behälter zum Einsatz kommt. Über ein oder mehrere Transportbänder 1016, die auch einen Puffer 1018 zum Zwischenladen von befüllten Behältern umfassen können werden die befüllten PET-Behälter zu einem Vereinzeler 1020 und weiter zu einer Trocknungsvorrichtung 1024 geleitet, in welcher die PET-Behälter getrocknet werden.

Nach erfolgter Trocknung werden die PET-Behälter in eine Etikettiermaschine 1026 befördert. Die Etikettiermaschine 1026 kann für verschiedene Etikettiertechniken ausgelegt sein, wie beispielsweise eine Etikettierung mittels Heißleim, Kaltleim, Selbstklebe-Etiketten oder Sleeves. Nach dem Bedrucken oder Etikettieren der PET-Behälter, werden die PET-Behälter durch eine zweite Trocknungsvorrichtung 1028, einen Linienverteiler 1030, Transportbänder 1032, eine Klebegebindeherstellung 1034 und eine Aushärtstrecke zu einem Handle-Applikator geleitet. In der Klebegebindeherstellung 1034 werden die PET-Behälter in bestimmte Gruppengrößen zusammen gruppiert und zu einem Gebinde, wie beispielsweise einem "Sixpack" verpackt. In dem Handle-Applikator wird ein Tragegriff an das Gebinde angebracht, was ein komfortables Tragen des Gebindes ermöglicht. Die fertigen Gebinde werden dann von einem Roboter 1042 zur Lagenherstellung entsprechend angeordnet und von einem Palettierer **1044** auf Paletten verpackt.

In der Anlagenkonfiguration 1000 können an verschiedenen Modulen und Maschinen sogenannte Formatwagen oder Formatregale angeordnet sein, um schnell wechselbare Formatsätze für kurze Umstellzeiten und automatischen Werkzeugwechsel zur Verfügung zu stellen. Beispiele für Formatwagen sind der Formatwagen 1006 für die Blasmaschine 1008, der Formatwagen 1012 für den Füller 1010, der Formatwagen 1022 für die Etikettiermaschine 1026, der Formatwagen 1038 für die Klebegebindeherstellung 1034 und der Formatwagen 1046 für den Palettierer 1044.

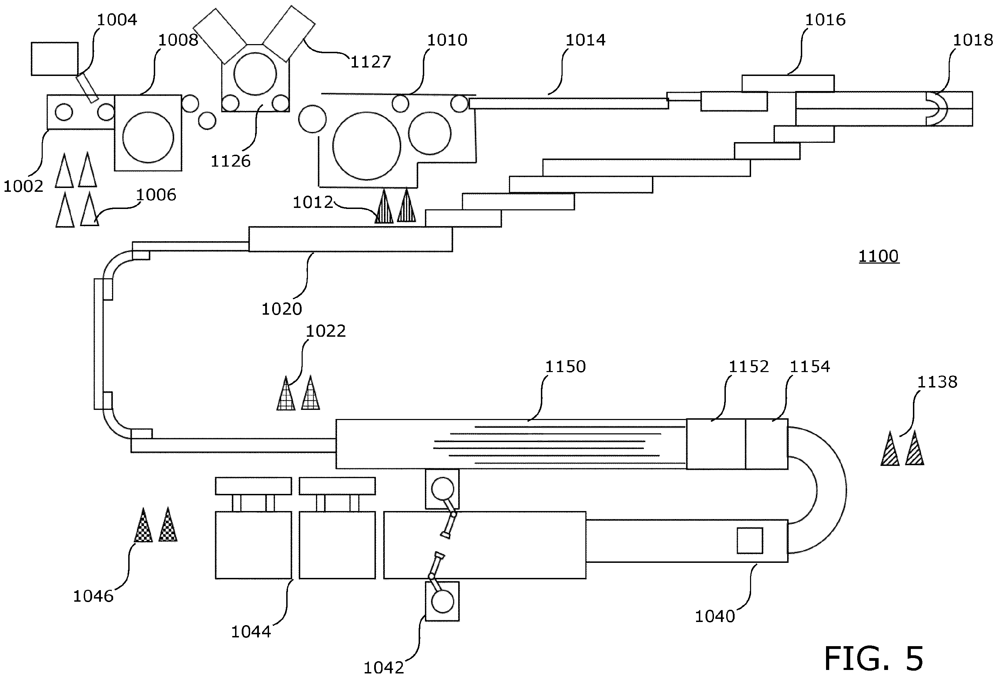

Figur 5 zeigt eine weitere beispielhafte Anlagenkonfiguration 1100 für PET-Behälter und Schrumpfpacker. Die Anlage 1100 aus Figur 5 umfasst viele der Module und Maschinen aus der Anlagenkonfiguration 1000 aus Figur **4****,** jedoch gibt es einige Unterschiede. Auf die Beschreibung der Module, die bereits in Zusammenhang mit Figur 4 beschrieben sind, wird daher für Figur 5 verzichtet.

Ein wesentlicher Unterschied zwischen den beiden beispielhaften Anlagenkonfigurationen 1000 und 1100 besteht darin, dass die Etikettiermaschine 1126 mit den Etikettiermodulen 1127 bereits nach der Blasmaschine 1008 und vor dem Füller 1008 installiert sein kann. Dafür kann die Anlagenkonfiguration 1100 gleich sechs Transportspuren 1150 umfassen, in die sich die PET-Behälter eindrängeln können. Nachdem die PET-Behälter sich entsprechend in eine der sechs Spuren 1150 eingedrängelt haben, werden sie in das Folieneinschlagmodul 1152 und anschließend in den Schrumpftunnel 1154 befördert.

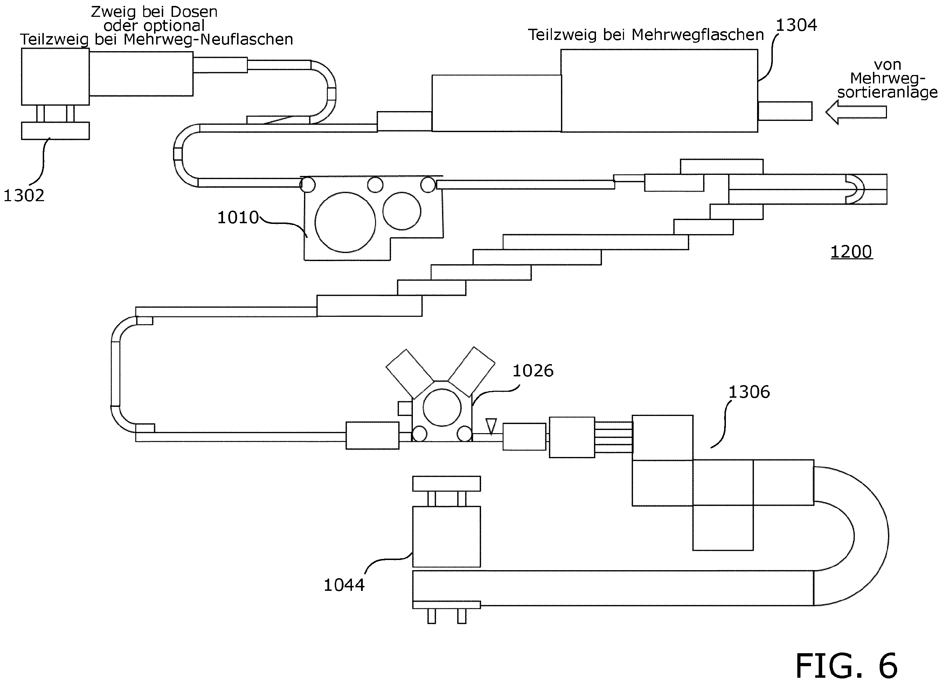

Figur 6 zeigt eine beispielhafte Anlagenkonfiguration 1200 für Dosen oder Glasflaschen. Die beispielhafte Anlagenkonfiguration 1200 aus Figur 6 hat wieder einige Ähnlichkeiten zu den Anlagenkonfigurationen 1000 und 1100 aus Figuren 4 und 5 und die Beschreibung der Anlagenkonfiguration beschränkt sich daher auf die Unterschiede der Anlagenkonfigurationen.

Wie in Figur 6 gezeigt, kann die beispielhafte Anlagenkonfiguration zwei separate Zuführungen umfassen. Eine erste Zufuhr, links in Figur 6, zeigt einen Zweig bei Dosen oder optional einen Teilzweig bei Mehrweg-Neuflaschen. Dabei werden die Behälter, d.h. Dosen oder neue Flaschen, von einem Depalettierer 1302 in die Maschine geführt, wo sie über Transportbänder zu dem Füller 1010 geführt werden. Eine zweite Zufuhr, rechts in Figur 6, zeigt einen Teilzweig bei Mehrwegflaschen, die von einer Mehrwegsortieranlage (nicht abgebildet) in die Anlage eingeleitet werden.

In dem Fall, dass die bereits benutzten Mehrwegflaschen über den Teilzweig bei Mehrwegflaschen in die Anlage 1200 eingeleitet werden, durchlaufen die Mehrwegflaschen zunächst die Reinigungsmaschine oder Waschmaschine 1304. Ein weiterer möglicher Unterschied der beispielhaften Anlagenkonfiguration 1200 ist der Umsetzpacker 1306 nach der Etikettiermaschine 1026. Der Umsetzpacker kann die Flaschen oder Dosen in eine Karton-Clip-Aufbringung oder in Kästen oder beides einsortieren.

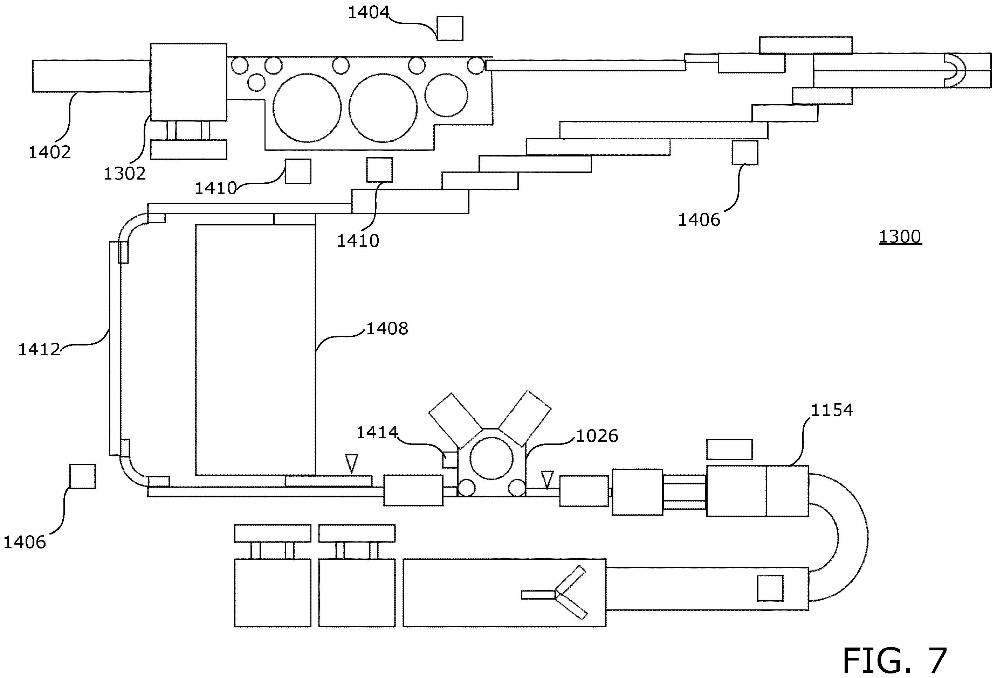

Figur 7 zeigt eine beispielhafte Anlagenkonfiguration 1300 für Dosen, in der wieder die bereits in den anderen Anlagenkonfigurationen beschriebene Elemente nicht mehr beschrieben werden. Die Dosen in der Anlagenkonfiguration 1300 werden von einem Magazin 1402 mit Dosen in den Depalettierer 1302 eingeleitet. Die Dosen werden, nachdem sie den Füller durchlaufen haben und gefüllt sind mittels Verschlussmagazin 1404 verschlossen und über die Transportbänder, wie oben beschrieben, weiter entlang der Anlage 1400 geleitet.

Der optionale Pasteur 1408 kann über den Bypass 1412 umgangen werden, falls dieser nicht benötigt wird. Im Pasteur 1408 können die frisch abgefüllten Produkte für die Konservierung pasteurisiert werden.

Im Gegensatz zu den Anlagenkonfigurationen 1000, 1100 und 1200 sind in der beispielhaften Anlagenkonfiguration 1300 verschiedene Tanks für entsprechende Verbrauchsgüter gezeigt, wie die Tanks 1410 mit Rinsflüssigkeit und/oder dem Abfüllprodukt und den Tanks 1406 mit Bandschmiermittel. Diese Tanks können auch in den bereits oben beschriebenen beispielhaften Anlagenkonfigurationen enthalten sein. In die Tanks 1406 und 1410 können beispielsweise die chemischen Produkte 106, die aus dem Mischer 110 zu den Maschinen geleitet wird, gespeichert werden.

## Patentansprüche

1. Verfahren zur bedienergeführten Inbetriebnahme einer Maschine, insbesondere einer Maschine in einer Maschinenlinie zum Abfüllen und Verpacken von Lebensmitteln und/oder Getränken, wobei das Verfahren umfasst:
Auslesen eines Inbetriebnahme-Status für wenigstens einen Baustein in einer Speicherprogrammierbaren Steuerung, SPS, der Maschine, wobei der Inbetriebnahme-Status eines Bausteins in der SPS gespeichert ist und anzeigt, ob der Baustein bereits in Betrieb genommen wurde oder nicht;
Übertragen des ausgelesenen Inbetriebnahme-Status für den wenigstens einen Baustein an einen Server;
Empfangen einer Handlungsanweisung von dem Server, falls der Inbetriebnahme-Status für den wenigstens einen Baustein anzeigt, dass der Baustein bisher nicht in Betrieb genommen wurde;
Ausgeben der empfangenen Handlungsanweisung an einen Benutzer; und
Ändern des Inbetriebnahme-Status für den wenigstens einen Baustein in der SPS basierend auf einer Ausführung der Handlungsanweisung durch den Benutzer.

2. Verfahren nach Anspruch 1, wobei der Baustein in der SPS eine Steuerroutine für einen Eingang, einen Ausgang und/oder einen Funktionsbaustein ist.

3. Verfahren nach Anspruch 1 oder 2, wobei Ausführung der Handlungsanweisung durch den Benutzer mittels Sensoren automatisch von der SPS erkannt wird und die SPS den Inbetriebnahme-Status basierend auf Sensordaten ändert.

4. Verfahren nach Anspruch 1 oder 2, wobei die SPS den Inbetriebnahme-Status basierend auf einer manuellen Eingabe des Benutzers ändert.

5. Verfahren nach einem der Ansprüche 1 bis **4,** des Weiteren umfassend:
Übertragen von Daten über die Ausführung der Handlungsanweisung durch den Benutzer an den Server, wobei die Daten Informationen umfassen, die angeben (i) dass die Handlungsanweisungen ausgeführt wurden, (ii) wann die Handlungsanweisungen ausgeführt wurden, von wem die Handlungsanweisungen ausgeführt wurden, und/oder welche Parameterwerte durch die Handlungsanweisungen bestimmt und/oder eingestellt wurden.

6. Verfahren nach einem der Ansprüche 1 bis 5, wobei die Handlungsanweisungen für die Inbetriebnahme eines Bausteine einen oder mehrere auszuführende Tests zum Bestimmen umfassen, ob relevante Funktionsmerkmale erfüllt werden und/oder ob korrekte Levelsensoren in der Maschine einen bestimmten Pegel zu messen.

7. Maschine mit bedienergeführter Inbetriebnahme, insbesondere eine Maschine in einer Maschinenlinie zum Abfüllen und Verpacken von Lebensmitteln und/oder Getränken, wobei die Maschine umfasst:
wenigstens eine Speicherprogrammierbare Steuerung, SPS, wobei die SPS konfiguriert ist zum Speichern eines Inbetriebnahme-Status für wenigstens einen Baustein der Maschine, wobei der Inbetriebnahme-Status eines Bausteins anzeigt, ob der Baustein bereits in Betrieb genommen wurde oder nicht;
eine Edge-Vorrichtung, die konfiguriert ist, den wenigstens einen Inbetriebnahme-Status an einen Server zu senden und Handlungsanweisungen von dem Server zu empfangen; und
eine Eingabe-Ausgabeeinheit, die konfiguriert ist zum Ausgeben von Handlungsanweisungen an einen Benutzer und zum Empfangen von Benutzereingaben,
wobei wenigstens eine Handlungsanweisung von dem Server über die Edge-Vorrichtung empfangen und über die Eingabe-Ausgabeeinheit angezeigt wird, falls der Inbetriebnahme-Status für den wenigstens einen Baustein anzeigt, dass der Baustein bisher nicht in Betrieb genommen wurde, und wobei der Inbetriebnahme-Status für den wenigstens einen Baustein in der SPS geändert wird, basierend auf einer Ausführung der Handlungsanweisung durch den Benutzer.

8. Maschine nach Anspruch 7, wobei die Eingabe-Ausgabeeinheit ein HMI und/oder ein mit der Maschine verbindbares Mobilgerät ist.

9. Maschine nach Anspruch 7 oder 8, wobei die Ausführung der Handlungsanweisung durch den Benutzer mittels Sensoren automatisch von der SPS erkannt wird und die SPS den Inbetriebnahme-Status basierend auf Sensordaten ändert.

10. Maschine nach einem der Ansprüche 7 bis 9, wobei die SPS den Inbetriebnahme-Status basierend auf einer manuellen Eingabe des Benutzers ändert.
